# EUROPÄISCHE PATENTSCHRIFT

(11) **EP 1 529 805 B1**
(45) Veröffentlichungstag und Bekanntmachung des Hinweises auf die Patenterteilung: **19.09.2012**
(21) Anmeldenummer: 04025409.6
(22) Anmeldetag: 26.10.2004
(51) Int. Cl.: C08L 1/26, C08J 3/00, C04B 24/38

(54) **Lagerstabile Teilchenzusammensetzung aus Polysacchariden und/oder Polysaccharidderivaten und zumindestens einem synthetischen Polymerisat, ein Verfahren zu deren Herstellung sowie deren Verwendung in Baustoffgemischen**
Storage stable particulate mixture of polysaccharides and/or polysaccharide derivatives and at least a synthetic polymer, process for their preparation and use in building compositions
Composition particulaire stable au stockage à base de polysaccharides et/ou de dérivés de polysaccharides et au moins un polymère synthétique, procédé de préparation et utilisation dans des mélanges de matériaux de construction.

(30) Priorität: 07.11.2003 DE 10352081
(43) Veröffentlichungstag der Anmeldung: 11.05.2005
(73) Patentinhaber: Dow Global Technologies LLC, Midland, MI 48674 (US)
(72) Erfinder: Weber, Gunter, Dr., 47802 Krefeld (DE); Brackhagen, Meinolf, Dr., 29664 Walsrode (DE); Schlesiger, Hartwig, Dr., 29683 Bad Fallingbostel (DE); Siegmund, Grit, Dr., 29683 Bad Fallingbostel (DE); Kull, Arne, Dr., 29699 Bomlitz (DE); Juhl, Hans-Jürgen, Dr., 29683 Bad Fallingbostel (DE); Bayer, Roland, Dr., 29664 Walsrode (DE); Klohr, Erik-Andreas, Dr., 29664 Walsrode (DE)
(74) Vertreter: Polypatent

(56) Entgegenhaltungen:
- EP-A- 0 530 768
- DE-A- 2 143 549
- DE-A- 2 521 679
- DE-A- 4 206 856
- DE-B- 1 283 726
- GB-A- 940 546
- US-A- 3 793 269

## Beschreibung

Die Erfindung betrifft lagerstabile Teilchenzusammensetzungen aus Polysacchariden und/oder Polysaccharidderivaten und zumindestens einem synthetischen Polymerisat, ein Verfahren zur Herstellung lagerstabiler Teilchenzusammensetzungen sowie deren Verwendung in Baustoffgemischen.

Polysaccharide und/oder Polysaccharidderivate, insbesondere Celluloseether werden vielseitig eingesetzt, z.B. als Verdickungs- und Wasserrückhaltemittel sowie als Schutzkolloid und Filmbildner. Einsatzbereiche liegen z.B. in der Herstellung von Bau-, Anstrich- und Klebstoffen, kosmetischen und pharmazeutischen Präparaten (z. B. von Zahnpasten), Nahrungs- und Genussmitteln und als Hilfsmittel für Polymerisationsprozesse. [Römpp Lexikon Chemie - Version 2.0, CD-ROM, Georg Thieme Verlag, Stuttgart / New York, 1999].

Die Herstellung von Celluloseethern ist bekannt [Ullmann's encyclopedia of industrial chemistry, Verlag Chemie, Weinheim / New York, (5.) A 5, 468-473].

Polysaccharide und/oder Polysaccharidderivate, insbesondere Celluloseether werden in Baustoffgemischen wie z.B. Putzen, Mörteln, Dünnbettklebern und Spachtelmassen häufig zusammen mit synthetischen Polymerisaten verwendet. Die verwendeten Mengen des Polymerisates betragen bis zu 25 Gew.-%, bezogen auf das Polysaccharid und/oder Polysaccharidderivat. Die synthetischen Polymerisate beeinflussen in der Baustoffmischung verschiedene dem Fachmann vertraute Eigenschaften wie z.B. die Verarbeitbarkeit. Beispiele für solche synthetischen Polymerisate sind z.B. in der DE-A-100 13 577 sowie in der EP-A- 0 530 768 erwähnte Polyacrylamide.

Diese synthetischen Polymerisate sind in der fertigen Baustoffmischung in deutlich geringeren Mengen als z.B. ein Celluloseether enthalten und können vorteilhaft in einem Blend mit dem Polysaccharid und/oder Polysaccharidderivat der Baustoffmischung zugesetzt werden. Die synthetischen Polymerisate, insbesondere Polyacrylamide und Polyacrylamidderivate können nach dem Stand der Technik in fester Form dem gemahlenen Polysaccharid und/oder Polysaccharidderivat, zugemischt werden, wie z.B. in DE A 3 913 518 beschrieben. Besonders synthetische Polymerisate oder Polymerisatgemische, die in geringen Mengen von ca. 0,01 bis 25 Gew.-%, bezogen auf das Polysaccharid und/oder Polysaccharidderivat, eingesetzt werden, können aufgrund ihres geringen Anteils an der Baustoffmischung nur mit erheblichem Aufwand getrennt von dem Polysaccharid und/oder Polysaccharidderivat dosiert und in der gesamten Mischung gleichmäßig verteilt werden.

Die Dosierung der synthetischen Polymerisate durch Vermengung mit dem Polysaccharid und/oder Polysaccharidderivat, insbesondere Celluloseether, in Pulverform vor der Zugabe zum Baustoffgemisch hat einige Nachteile:
Unterscheiden sich das Polysaccharid und/oder Polysaccharidderivat und das synthetische Polymerisat in der Korngrößenverteilung oder in der Dichte, kann bei Transport und Lagerung sowie der Handhabung eine Entmischung eintreten, die zu einer inhomogenen Verteilung des synthetischen Polymerisates führen kann.

Darüber hinaus wird unter bestimmten Bedingungen eine Abnahme der Verdickungswirkung der synthetischen Polymerisate im Baustoffgemisch beobachtet. Dieser Effekt tritt insbesondere in Gips-gebundenen Systemen auf, wenn die Lagerdauer des Gemisches einige Monate beträgt. Während ein Polysaccharid und/oder Polysaccharidderivat, z.B. ein Celluloseether, unter den im Baustoffgemisch herrschenden Bedingungen seine Wirkung behält, verliert das synthetische Polymerisat nach einiger Zeit, z.B. 6-12 Monaten, oft seine Wirkung. Dies ist vermutlich auf die Einwirkung von Feuchtigkeit zurückzuführen, wodurch hydrolysierbare Bindungen in dem synthetischen Polymerisat gespalten werden. Zieht man den im Baustoffgemisch herrschenden hohen pH-Wert und die dort anwesenden mehrwertigen Ionen, insbesondere Calcium- und Aluminiumionen in Betracht, so sind auch durch Basen hervorgerufene chemische Reaktionen bzw. Komplexierungs-Reaktionen denkbar, die für den Wirkungsverlust der synthetischen Polymerisate verantwortlich sein könnten.

Beispielsweise wird der Wirkungsverlust von Polyacrylamiden und Polyacrylamidderivaten in Gips enthaltenden Baustoffsystemen durch feuchtwarme Bedingungen begünstigt, wie sie etwa bei langen Transportwegen (Schiffstransport) und in den wärmeren Klimazonen auftreten. Es ist nicht bekannt, ob der Wirkungsverlust dieser Polymerisate auf Kettenabbau, auf Hydrolyse der Amidbindungen, auf Komplexierung des Polyacrylamidderivates durch Kationen oder auf andere Ursachen zurückzuführen ist. [Marcus J. Caulfield, Greg G. Qiao, and David H. Solomon; "Some Aspects of the Properties and Degradation of Polyacrylamides"; Chem. Rev. 2002, 102, 3067 - 3083, Shufu Peng, Chi Wu; "Light Scattering Study of the Formation and Structure of Partially Hydrolyzed Poly(acrylamide)/Calcium (II) Complexes"; Macromolecules 1999, 32, 585 - 589].

Es besteht ein Bedarf an Zusammensetzungen aus Polysacchariden und/oder Polysaccharidderivaten und zumindestens einem synthetischen Polymerisat, welche die genannten Nachteile nicht aufweisen.

Es sind Verfahren bekannt, die einen Teil der genannten Nachteile vermeiden. In der DE-A-100 41 311 wird ein Verfahren zur Additivierung von Celluloseethern offenbart, nach dem eine Methylhydroxyethylcellulose mit einem redispergierten Polyvinylacetat-Ethylen Copolymer über mehrere Stunden intensiv verknetet wird. Dieses Verfahren weist den Nachteil auf, dass die scherempfindliche Ausgangsware durch die Verknetung einen erheblichen Viskositätsverlust erleidet. Das Verfahren ist somit unwirtschaftlicher als die herkömmliche Pulver-Vermischung. Um einen Celluloseether mit gleicher Endviskosität wie bei einer vergleichbaren Pulver-Mischung zu erhalten, muss ein teurerer Zellstoff eingesetzt werden, um so den Polymerkettenabbau des Celluloseethers zu kompensieren.

Ebenfalls können wasserlösliche oder wasserdispergierbare synthetische Polymerisate, die durch Hydrolyse abspaltbare Gruppen enthalten, wegen der begrenzten Lagerstabilität in Gegenwart von Wasser nicht in großen Mengen oder über einen längeren Zeitraum bevorratet werden.

Hochviskose Lösungen oder Suspensionen von Polymeristaen, die z.B. eine Viskosität von > 1000 mPa*s aufweisen, können darüber hinaus nur mit großem Aufwand hergestellt und gefördert werden und können daher nur unter erheblichem technischen Aufwand in den Celluloseether eingearbeitet werden.

Der Erfindung lag daher die Aufgabe zugrunde, eine lagerstabile Zusammensetzung aus Polysacchariden und/oder Polysaccharidderivaten und zumindestens einem synthetischen Polymerisat, wie sie in den unterschiedlichsten Anwendungen, z.B. in Baustoffgemischen eingesetzt werden, bereitzustellen.

Erfindungsgemäß gelingt es, auch solche Polymerisate in Teilchenzusammensetzungen lagerstabil einzuarbeiten, die bisher wegen ihres schleichenden Wirkungsverlustes bei der Lagerung nur eingeschränkt verwendet werden konnten.

Die oben geschilderten Nachteile, welche mit der Abmischung von Pulvern einhergehen, können durch die Zugabe des synthetischen Polymerisates, welches bevorzugt in fester Form eingesetzt wird, zu einem wasserfeuchten Polysaccharid und/oder Polysaccharidderivat, wie z.B. einem Celluloseether und anschließende Homogenisierung, gegebenenfalls unter Zusatz von Wasser, vermieden werden.

Die Erfindung betrifft daher Teilchenzusammensetzungen, enthaltend Celluloseether und zumindestens ein Polyacrylamid oder Polyacrylamid derivat sowie gegebenenfalls weitere Hilfsstoffe, dadurch gekennzeichnet, dass
A) die Teilchen aus mehreren Festphasen gebildet werden, wobei
B) die Festphase des synthetischen Polymerisates in der Festphase der Polysaccharide und/oder Polysaccharidderivate enthalten ist.

Die Festphase der Polysaccharide und/oder Polysaccharidderivate enthält also die Festphase des synthetischen Polymerisates, so dass in vorteilhafter Weise keine Entmischungserscheinungen und auch keine unerwünschten Wirkungsverluste des synthetischen Polymerisates z.B. durch Einwirkung weiterer Zusatzstoffe, Sauerstoff oder Feuchtigkeit zu erwarten sind.

Im Sinne der Erfindung werden unter Polysacchariden z.B. Stärke oder Cellulose, unter Polysaccharidderivaten derivatisierte, d.h. mit zusätzlichen Atomgruppen kovalent verbundene Polysaccharide wie z.B. Stärkeether oder Celluloseether verstanden. Celluloseether sind dabei bevorzugt einzusetzen. Von den Celluloseethern besonders bevorzugt sind dabei in siedendem Wasser unlösliche Celluloseether, insbesondere Methylhydroxyethylcellulose.

Als synthetisches Polymerisat werden dabei bevorzugt Verbindungen mit hydrolysierbaren Gruppen, wie z.B. Ester-, Amid-, Urethangruppierungen eingesetzt.

Besonders bevorzugt werden Polyacrylamide oder Poyacrylamidderivate verwendet. Es können beispielsweise teilverseifte Polyacrylamide und Copolymere aus Acrylamid und Alkalimetall-Acrylaten mit einem mittleren Molekulargewicht von etwa 1*10⁶ bis 10*10⁶ g/mol eingesetzt werden.

Üblicherweise enthält die erfindungsgemäße Teilchenzusammensetzung von 0,01 bis 25 Gew.-%, bevorzugt 0,1 bis 10 Gew.-%, besonders bevorzugt 1 bis 6 Gew.-%, des synthetischen Polymerisates, bezogen auf das trockene Poysaccharid oder Polysaccharidderivat.

Das synthetische Polymerisat wird bevorzugt in Form von z. B. Pulver, Flocken, Gries oder Granulat dem wasserfeuchten Polysaccharid oder Polysaccharidderivat untergemischt. Die Vermischung wird üblicherweise bei Temperaturen unterhalb von 100°C durchgeführt, insbesondere bei Temperaturen unterhalb des Flockpunktes, wenn ein Polysaccharid und/oder Polysaccharidderivat mit einem thermischen Flockpunkt in Wasser eingesetzt wird. Geeignete Mischaggregate können kontinuierlich oder dikontinuierlich betrieben werden.

Bevorzugt liegt das Polysaccharid und/oder Polysaccharidderivat in Form eines wasserfeuchten Filterkuchens vor. Grundsätzlich können aber auch mit anderen Lösungsmitteln und -gemischen versetzte Polysaccharide und/oder Polysaccharidderivate, z.B. Celluloseether verwendet werden, wenn diese mit organischen Lösungsmitteln oder -gemischen gereinigt wurden. Beispielsweise kann auch eine mit einem Gemisch aus Ethylalkohol und Wasser gereinigte Hydroxyethylcellulose verwendet werden.

Wird ein Celluloseether mit thermischem Flockpunkt in Wasser eingesetzt, wird vorteilhaft ein wasserfeuchter Filterkuchen verwendet. Der Wassergehalt des Polysaccharides und/oder Polysaccharidderivates vor der Zugabe des synthetischen Polymerisates sollte bei 30 - 80 Gew.-%, bevorzugt zwischen 50 und 70 Gew.-% liegen. Dazu muss gegebenenfalls nach der Filtration Wasser hinzugefügt werden.

Das Gemisch aus Polysaccharid und/oder Polysaccharidderivat und synthetischem Polymerisat wird nach der Vermischung einer Homogenisierungsvorrichtung zugeführt und gegebenenfalls vor oder während der Homogenisierung mit Wasser versetzt. Geeignete Homogenisierungsapparaturen sind in der DE-A-100 09 411 auf der Seite 4, Zeilen 26 bis Zeile 54 genannt. Bevorzugt werden kontinuierlich arbeitende Apparaturen, in denen die Zusammensetzung homogenisiert wird. Besonders bevorzugt sind unter dem Begriff Schnecken- oder Strangpresse bekannte Vorrichtungen sowie Schneckenpumpen. In vielen Fällen reicht es aus, die das Gemisch in einer 1- oder 2-Wellen Schnecke zu homogenisieren, die stirnseitig mit einem Lochblech versehen ist (z.B. ein Fleischwolf).

Für die Lösung der Aufgabe ist es nicht entscheidend, ob die Apparatur kontinuierlich oder diskontinuierlich betrieben wird. Gegebenenfalls können vor, nach oder während dieses Verfahrensschrittes weitere synthetische Polymerisate, Hilfsstoffe oder Modifikatoren in Mengen von bis zu 50 Gew.-%, bevorzugt jedoch in untergeordneten Mengen von etwa bis zu 10 %, bezogen auf die Gesamtmasse, zugegeben werden.

Während der Homogenisierung werden bis zu 2, bevorzugt bis zu 1,5, besonders bevorzugt 1 - 1,5 Gewichtsteile Wasser pro Gewichtsteil Zusammensetzung aus Polysaccharid und/oder Polysaccharidderivat und synthetischem Polymerisat zugegeben.

Die auf diese Weise erzeugte Masse wird getrocknet und gemahlen. Bevorzugt wird das Produkt einer Mahltrocknung unterworfen. Die erzeugte Masse aus Polysaccharid und/oder Polysaccharidderivat und synthetischem Polymerisat weist eine im Allgemeinen nicht unter dem Eigengewicht frei fließende Konsistenz auf. Die Masse sollte dennoch so plastisch sein, dass sie mit den Händen deformierbar ist.

Welche Konsistenz innerhalb der angegebenen Bandbreite die vorteilhafteste ist, hängt stark von dem Celluloseether und dem synthetischen Polymerisat sowie dem Wassergehalt und dem Mahlverfahren ab. Die jeweils beste Einstellung muss durch Versuche ermittelt werden.

Beispielsweise wird bei der Verwendung von Celluloseethern mit einem thermischen Flockpunkt in Wasser und anschließender Mahlung in einer sieblosen Hochdrehzahl-Gasstrom-Prallmühle, wie z. B. in DE-A-100 09 409 beschrieben, ein Wassergehalt der homogenisierten Masse von 50 - 80 Gew.-%, bevorzugt 65 - 78 Gew.-%, bezogen auf die Gesamtmasse, eingestellt. Der Wassergehalt kann jedoch in Abhängigkeit von Menge und Zusammensetzung des synthetischen Polymerisates variieren und muss durch geeignete Versuche für jede Teilchenzusammensetzung von Polysacchariden und/oder Polysaccharidderivaten mit einem synthetischen Polymerisat ermittelt werden.

Der erfindungsgemäßen Zusammensetzung können gegebenenfalls nach der Mahlung noch weitere Zusatzmittel in fester und / oder flüssiger Form zugegeben werden.

Bei der nach der Mahlung erhaltenen Teilchenzusammensetzung, mindestens enthaltend ein Polysaccharid und/oder Polysaccharidderivat und ein synthetisches Polymerisat, ist das synthetische Polymerisat in dem Polysaccharid und/oder Polysaccharidderivat verteilt und dadurch gegenüber Umwelteinflüssen, wie z.B. Feuchtigkeit, einem erhöhtem pH-Wert in einem Baustoffgemisch oder Sauerstoff, geschützt.

Ein weiterer Vorteil der erfindungsgemäßen Teilchenzusammensetzung ist die Vermeidung von ungleicher Konzentrierung und Portionierung des synthetischen Polymerisates im Baustoffgemisch. Damit wird vermieden, dass Inhomogenitäten im fertigen Produkt entstehen, wie sie bei der Pulver-Compoundierung auftreten können. Außerdem entfällt die Bevorratung synthetischer Polymerisate in verschieden Feinheiten. Entmischungsphänomene bei der Lagerung und Handhabung der Teilchenzusammensetzung sind nicht zu erwarten.

Ein weiterer Gegenstand der Erfindung ist ein Verfahren zur Herstellung der vorstehend beschriebenen Teilchenzusammensetzung, wobei
A) zu einem wasserfeuchten Polysaccharid oder Polysaccharidderivat, bevorzugt mit einem Wassergehalt von 30 - 80 Gew.-%, ein oder mehrere wasserlösliche oder wasserdispergierbare synthetische Polymerisate in einer Gesamtmenge von 0,01 bis 25 Gew.-%, bezogen auf den trockenen Celluloseether, in nicht gelöster Form und gegebenenfalls weitere Hilfsstoffe gegeben werden und
B) dieses Gemisch in einer Homogenisierungsapparatur, die bevorzugt kontinuierlich arbeitet, zu einer Masse verarbeitet wird, wobei in dieser Verfahrensstufe gegebenenfalls Wasser hinzugefügt wird und
C) die erhaltene Masse gemahlen und getrocknet oder zuerst getrocknet und dann gemahlen oder einer Mahltrocknung unterworfen wird.

Auf die Lagerung und Förderung von Lösungen, Suspensionen oder Dispersionen der Polymerisate kann bei diesem Verfahren verzichtet werden. Dieses Verfahren ist wegen der kurzen Kontaktzeit mit Wasser besonders geeignet für wasserlösliche oder wasserdispergierbare synthetische Polymerisate. Besonders vorteilhaft ist dieses Verfahren für die Einarbeitung wasserlöslicher oder wasserdispergierbarer synthetischer Polymerisate, die hydrolysierbare Bindungen enthalten, z.B. Polyacrylamide und Polyacrylamidderivate.

Ein weiterer Gegenstand der Erfindung ist die Verwendung der vorstehend genannten Teilchenzusammensetzungen als Verdicker in Baustoffmischungen wie z.B. Putzen, Spachtelmassen, Dünnbettklebem sowie Mörtelmischungen.

### Beispiele

Die Werte für DS_{Methyl} und MS_{Hydroxyethyl} wurden nach der Zeisel-Methode bestimmt.

Die angegebenen Viskositäten wurden mit einem Rotationsviskosimeter vom Typ Haake RV 100, System M500, Messeinrichtung MV, bei einem Schergefälle von 2,55 s⁻¹ durchgeführt. Die Lösungen enthielten, sofern nicht anders angegeben, 2 Gew.-% Celluloseether in Wasser.

Prozentangaben bedeuten Gewichtsprozent, sofern nicht anders angegeben.

Für die Bestimmung der Sieblinien wurden die Celluloseether mittels einer Siebmaschine nach DIN 4188 ausgesiebt.

### Beispiel 1

In einem handelsüblichen Mischwerk mit horizontaler Welle (Fa. Drais) wird eine wasserfeuchte MHEC (35 kg; DS_{Methyl} 1,86; MS_{Hydroxyethyl} 0,27; Wassergehalt 56 Gew.-%), mit einem Acrylamid-Acrylat Copolymer (0,92 kg; Polyacrylamid A; Acrylat-Anteil 20 - 40 mol-%), versetzt. Anschließend wird bis zu einem Wassergehalt von 72-73 Gew.-% unter Mischen Wasser hinzugefügt.

Die so erhaltenen Masse wird in einen Rührbehälter mit vertikaler Mischwelle eingetragen. Die Rührflügel der Mischwelle sind so angeordnet, dass eine Presswirkung in Richtung der am Behälterboden angebrachten, mit einer Lochblende versehenen Austragsschnecke erzielt wird. Die Behälterwand ist mit Stromstörern versehen, um ein Mitdrehen der Masse zu verhindern. Das Mahlgut wird durch die Lochblende gepresst und aufgefangen und das derart homogenisierte Mahlgut wird wieder in den Rührbehälter gefüllt.

Das Mahlgut wird anschließend aus dem Rührbehälter über die Austragsschnecke in eine handelsübliche Hochdrehzahl-Gasstrom-Prallmühle gefördert und mittels erhitztem Gas-Gemisch gleichzeitig mit der Mahlung getrocknet. Das Produkt wird über einen der Mühle nachgeschalteten Zyklon abgeschieden und, nach Abtrennung des Grobanteils > 315 µm mittels Rüttelsieb, gesammelt.

Die gleiche wasserfeuchte MHEC wird für Vergleichszwecke ohne Zusatz von Polyacrylamid auf einen Wassergehalt von 72 - 73 Gew.-% angefeuchtet und wie die erfindungsgemäße Zusammensetzung gemahlen und getrocknet.

| | Vergleich 1 | Teilchenzusammensetzung 1 |
|---|---|---|
| Wassergehalt in Gew.-% | 3,5 | 2,7 |
| Viskosität in mPa s | 35380 | 37330 |
| Polyacrylamid A | - | 6 Gew.-% |
| Schüttgewicht in g/l | 290 | 270 |
| Anteil < 250 µm | 89 Gew.-% | 91 Gew.-% |
| Anteil < 63 µm | 26 Gew.-% | 32 Gew.-% |

| | | |
|---|---|---|
| ¹ Trocknungsverlust nach 4h bei 105 °C | | |

### Beispiel 2

Eine wasserfeuchte MHEC (48 kg; DS_{Methyl} 1,55; MS_{Hydroxyethyl} 0,27) wird wie in Beispiel 1 beschrieben, mit Polyacrylamid A (0,93 kg), versetzt. Der Wassergehalt nach der Zugabe des Polyacrylamides A, bezogen auf die gesamte Trockenmasse, betrug 70 Gew.-%. In einer weiteren Versuchseinstellung wird ein Acrylamid-Acrylat Copolymer mit einem Acrylat-Anteil von ca. 5 - 10 mol-% (Polyacrylamid B) verwendet. Anschließend wird die Masse, wie in Beispiel 1 beschrieben, in den Rührbehälter gefüllt, homogenisiert und gemahlen.

Die gleiche wasserfeuchte MHEC wird für Vergleichszwecke ohne Zusatz eines synthetischen Polymerisates auf einen Wassergehalt von 70 Gew.-% angefeuchtet und wie die erfmdungsgemäße Zusammensetzung gemahlen und getrocknet.

| | Vergleich 2 | Teilchenzusammensetzung 2 | Teilchenzusammensetzung 3 |
|---|---|---|---|
| Wassergehalt in Gew.-% | 6,7 | 4,4 | 5,6 |
| Viskosität in mPa s | 57750 | 60280 | 55760 |
| Polyacrylamid A | - | 4,8 | - |
| Polyacrylamid B | - | - | 4,8 |
| Schüttgewicht in g/l | 280 | 230 | 220 |
| Anteil < 250 µm | 85 | 86 | 86 |
| Anteil < 63 µm | 18 | 26 | 22 |

Je 1 kg eines homogenisierten Gels der Teilchenzusammensetzung 2 und 3 werden vor der Mahlung dem Rührbehälter entnommen, in einem Umluft - Trockenschrank bei 55°C getrocknet und in einer mit einem 0,5 mm Sieb versehenen Labor-Siebmühle (Fa. Alpine) gemahlen.

| | Teilchenzusammensetzung 4 | Teilchenzusammensetzung 5 |
|---|---|---|
| Wassergehalt in Gew.-% | < 10 | < 10 |
| Polyacrylamid A | 4,8 | - |
| Polyacrylamid B | - | 4,8 |
| Schüttgewicht in g/l | 360 | 430 |
| Anteil < 250 µm | 64 | 68 |
| Anteil < 63 µm | 19 | 14 |

### Beispiel 3

Eine wasserfeuchte MHEC (DS_{Methyl} 1,55; MS_{Hydroxyethyl} 0,26; Wassergehalt 58 Gew.-%), vermischt mit 4,8 Gew.-% Polyacrylamid B wird kontinuierlich in eine 2-Wellenschnecke gefördert. Der Produktstrom wird auf 18-20 kg/h eingestellt. Die 2-Wellenschnecke weist einen Schneckendurchmesser von 60 mm und eine Länge von 1200 mm auf. Durch eine Bohrung im Mantel der Schnecke werden 8-9 1/h Wasser zudosiert.

Das so erzeugte Gemisch passiert eine Lochplatte mit Bohrungen von ca. 1 cm Durchmesser und wird in eine 1-Wellenschnecke gefördert. Diese Schnecke beschickt über eine weitere Lochblende eine handelsübliche sieblose Hochdrehzahl-Gasstrom-Prallmühle, in der das Produkt mittels erhitztem Gas-Gemisch gleichzeitig mit der Mahlung getrocknet wird.

In einem weiteren Versuch wird wie vorstehend verfahren, mit dem Unterschied dass Polyacrylamid A eingesetzt wird und 5 l/h Wasser dosiert werden.

In einem Vergleichsbeispiel wird kein Polyacrylamid eingesetzt.

| | Vergleich 3 | Teilchenzusammensetzung 6 | Teilchenzusammensetzung 7 |
|---|---|---|---|
| Wassergehalt in Gew.-% | 3,3 | 3,0 | 3,6 |
| Viskosität² in mPa s | 55110 | 51940 | 50810 |
| Polyacrylamid A | - | - | 4,8 |
| Polyacrylamid B | - | 4,8 | - |
| Schüttgewicht in g/l | 180 | 170 | 180 |
| Anteil < 250 µm | 95 | 97 | 98 |
| Anteil < 63 µm | 27 | 36 | 51 |

### Beispiel 4

Die wasserfeuchte MHEC aus dem voranstehenden Beispiel (DS_{Methyl} 1,55; MS_{Hydroxyethyl} 0,26; Wassergehalt 59,4 Gew.-%) wird in einem Labor-Kneter der Fa. Werner & Pfleiderer, Typ UK 4-III 1 mit Z-Schaufeln, mit 10 Gew.-% Polyacrylamid A, bezogen auf trockene MHEC, versetzt. Anschließend wird die Masse auf einen Wassergehalt von 70,5 Gew.-% angefeuchtet und 60 min. geknetet. Das Produkt wird in einem Umluft - Trockenschrank bei 55°C getrocknet und in einer mit einem 0,5 mm Sieb versehenen Labor-Siebmühle (Fa. Alpine) gemahlen.

| | Teilchenzusammensetzung 8 |
|---|---|
| Wassergehalt in Gew.-% | 2,1 |
| Polyacrylamid A | 10 |
| Polyacrylamid B | - |
| Anteil < 250 µm | 76 |
| Anteil < 63 µm | 29 |

### Beispiel 5 (Verfahrensvergleich)

### erfindungsgemäß:

Eine wasserfeuchte MHEC (DS_{Methyl} 1,57; MS_{Hydroxyethyl} 0,25; Wassergehalt 63 Gew.-%), wird kontinuierlich in eine 2-Wellenschnecke gefördert. Der Produktstrom wird auf 18-20 kg/h eingestellt. Die 2-Wellenschnecke weist einen Schneckendurchmesser von 60 mm und eine Länge von 1200 mm auf. Durch eine Bohrung im Mantel der Schnecke werden ca. 14 kg/h Wasser zudosiert.

Das so erzeugte Gemisch passiert eine Lochplatte mit Bohrungen von ca. 1 cm Durchmesser und wird in eine 1-Wellenschnecke gefördert. Diese Schnecke beschickt über eine weitere Lochblende eine handelsübliche sieblose Hochdrehzahl-Gasstrom-Prallmühle, in der das Produkt mittels erhitztem Gas-Gemisch gleichzeitig mit der Mahlung getrocknet wird.

### Vergleich mit dem Stand der Technik:

In einem weiteren Vergleichsbeispiel wird der MHEC in Wasser gelöstes Polyacrylamid A zugesetzt. Durch eine Bohrung im Mantel der Schnecke werden 15 kg/h einer 15 gew.%-igen viskosen Lösung des Polyacrylamids A in Wasser zudosiert. Dazu ist es erforderlich, eine Zahnradpumpe einzusetzen. Die Mahlung war wegen starker Stromschwankungen in der Mühle nicht möglich. Die erzeugte Masse war erkennbar inhomogen und bestand aus gelöstem Polyacrylamid und nahezu unverändertem Celluloseether.

### Beispiel 6

In einem Vergleichsversuch wurde die ungeknetete wasserfeuchte MHEC-Ausgangsware aus dem voranstehenden Beispiel ohne Zusatz von Polyacrylamid verarbeitet. Dazu wurde die Ausgangsware ohne weitere Bearbeitung direkt in einem Umluft - Trockenschrank bei 55°C getrocknet und in einer mit einem 0,5 mm Sieb versehenen Labor-Siebmühle (Fa. Alpine) gemahlen.

Eine weitere Probe des Ausgangsmaterials wurde in einem Labor-Kneter, wie oben beschrieben, auf einen Wassergehalt von 70,5 Gew.-% angefeuchtet und 60 min. geknetet. Anschließend wurde auch diese Probe wie die vorhergehende getrocknet und gemahlen.

Die Viskosität des durch Verknetung hergestellten Produktes ist gegenüber ungekneteten, auf gleiche Weise getrockneten und gemahlenen Ausgangsware deutlich vermindert. Der gleiche Effekt wird beobachtet, wenn das Polyacrylamid A geknetet wird.

| | | ungeknetet | geknetet | Änderung, % |
|---|---|---|---|---|
| Vergleich 4 | Viskosität in mPa*s (2 Gew.-% Lsg.) | 59300 | 45330 | -23,5 |
| MHEC | Viskosität in mPa*s ( 1 Gew.-% Lsg.) | 8032 | 5710 | -28,9 |
| Vergleich 5 | Viskosität in mPa*s (2 Gew.-% Lsg.) | 20000 | 18070 | -9,7 |
| Polyacrylamid A | Viskosität in mPa*s ( 1 Gew.-% Lsg.) | 6753 | 5719 | -15,3 |

### Lagerstabilitätstest

Die in Beispiel 1 beschriebene Methylhydroxyethylcellulose (Vergleich 1) wurde mit 4,6 Gew.-% Polyacrylamid A, das in Beispiel 1 verwendet wurde, intensiv trocken vermischt (Vergleichsabmischung 1).

Diese Abmischungen wurden mit der erfindungsgemäßen Teilchenzusammensetzung 1 verglichen. Die anwendungstechnische Prüfung der Abmischungen bzw. der erfindungsgemäßen Teilchenzusammensetzung hinsichtlich ihrer Lagerstabilität erfolgte in einem anwendungsnahen Gipsspachtel-System.

Hierzu wurden zu der gebrauchsfertigen Gipsmischung die erfindungsgemäßen Teilchenzusammensetzung 1 bzw. die Vergleichsabmischung 1 (0,5 Gew.-%) trocken zugemischt. Für die Testung der Lagerstabilität wurden ein Teil der Trockenmischungen aus Gipsspachtel-Grundmischung und Additiv über einen Zeitraum von 10 Tagen in Polyethylenbeuteln luftdicht verschweißt bei 40°C im Trockenschrank und ein anderer Teil als Referenzmaterial in nicht luftdicht verschlossenen Polyethylenbeuteln im Normklima nach DIN EN 1204 gelagert.

Die Beurteilung des Gipsspachtel-Materials erfolgte in einem Handrührtest, wobei das Andickverhalten und die Standfestigkeit des angerührten Gipsspachtels beurteilt wurden. Dazu wurde das Trockenmaterial mit der entsprechenden Menge Anmachwasser versetzt (Wasser/Feststoff-Faktor 0,58) und mit der Hand angerührt (Rührdauer 60s), wobei die erste Beurteilung des SpachtelMaterials erfolgte. Nach einer Ruhezeit von 10 min wurde der Gipsspachtel erneut gerührt und beurteilt. Kriterien für die Beurteilung waren Andickverhalten und Standfestigkeit des Gipsspachtels. Die Referenzmaterialien aus der Normallagerung wurden hinsichtlich Andickverhalten und Standfestigkeit jeweils mit 100 % beurteilt, entsprechend wurden verringertes Andicken und Standfestigkeit der warmgelagerten Muster mit Noten kleiner 100 % bewertet. Der vollständige Verlust der Verdickungswirkung des Polyacrylamides resultiert in einem Wert von 80 %.

Die Tabellen 1 und 2 verdeutlichen die überraschend erhöhte Lagerstabilität bei Einsatz der erfindungsgemäßen Teilchenzusammensetzung auch bei kritischen Lagerbedingungen, unter denen für herkömmlich Abmischungen von Pulvern ein deutlicher Wirkungsverlust zu verzeichnen ist.

Die Testergebnisse zeigen für die Verwendung einer Abmischung von Pulver des Polyacrylamids pulverförmiger Methylhydroxyethylcellulose in einem stark Calcium-haltigen Baustoffsystem bereits nach dreitägiger Lagerung einen fast vollständigen Verlust der Verdickungswirkung. Die erfindungsgemäße Teilchenzusammensetzung zeigt dagegen eine gleichbleibende Verdickungswirkung auch nach zehntägiger Lagerung im Gipsspachtel-System.

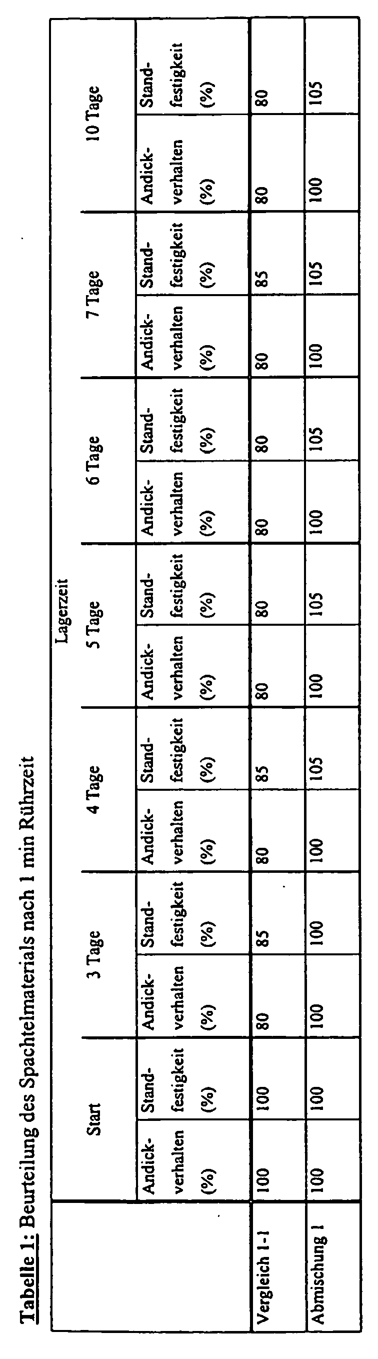

**Tabelle 2: Beurteilung des Spachtelmaterials nach 10 min Ruhezeit**

| | Lagerzeit | | | | | | |
|---|---|---|---|---|---|---|---|
| | Start | 3 Tage | 4 Tage | 5 Tage | 6 Tage | 7 Tage | 10 Tage |
| | Standfestigkeit (%) | Standfestigkeit (%) | Standfestigkeit (%) | Standfestigkeit (%) | Standfestigkeit (%) | Standfestigkeit (%) | Standfestigkeit (%) |
| Vergleich 1-1 | 100 | 100 | 100 | 90 | 85 | 85 | 80 |
| Abmischung 1 | 100 | 105 | 105 | 105 | 105 | 105 | 105 |

## Patentansprüche

1. Teilchenzusammensetzungen aus Celluloseether und zumindest einem Polyacrylamid oder Polyacrylamidderivat sowie gegebenenfalls weiteren Hilfsstoffen, **dadurch gekennzeichnet, dass**
I. die Teilchen mehrere Festphasen enthalten, wobei
II. die Festphase des Polyacrylamids oder Polyacrylämidderivats in der Festphase des Celluloseethers enthalten ist.

2. Teilchenzusammensetzung nach Anspruch 1, **dadurch gekennzeichnet, dass** das Polyacrylamid oder Polyacrylamidderivat in Mengen von 0,01 - 25 Gew.-%, bezogen auf den trockenen Celluloseether, enthalten ist.

3. Verfahren zur Herstellung von Teilchenzusammensetzungen aus Polysacchariden und/oder Polysaccharidderivaten und zumindest einem synthetischen Polymerisat sowie gegebenenfalls weiteren Hilfsstoffen **dadurch gekennzeichnet, dass** man
A) zu einem wasserfeuchten Polysaccharid und/oder Polysaccharidderivat mit einem Wassergehalt von 30 - 80 Gew.-% ein oder mehrere synthetische Polymerisate in einer Gesamtmenge von 0,01 - 25 Gew.-%, bezogen auf das trockene Polysaccharid oder Polysaccharidderivat, in nicht gelöster Form gibt und
B) dieses Gemisch in einer Homogenisierungsapparatur zu einer Masse verarbeitet wird, wobei in dieser Verfahrensstufe gegebenenfalls Wasser hinzugefügt wird, und
C) die erhaltene Masse mahlt und trocknet oder zuerst trocknet und dann mahlt oder einer Mahltrocknung unterwirft.

4. Verfahren nach Anspruch 3, **dadurch gekennzeichnet, dass** weitere Hilfsstoffe in Mengen von < 50 Gew.-% vor, während oder nach der Verarbeitung in der Homogenisierungsapparatur hinzugefügt werden.

5. Verfahren nach einem der Ansprüche 3 oder 4, **dadurch gekennzeichnet, dass** Celluloseether, bevorzugt solche mit thermischem Flockpunkt in Wasser, als Polysaccharidderivate verwendet werden.

6. Verfahren nach einem der Ansprüche 3 - 5, **dadurch gekennzeichnet dass** der Wassergehalt des Celluloseethers 50 - 80 Gew.-%, bevorzugt 65 - 75 Gew.-% beträgt.

7. Verfahren zur Herstellung von Teilchenzusammensetzungen nach einem der Ansprüche 3 - 6, **dadurch gekennzeichnet, dass** Polyacrylamide und Polyacrylamidderivate als synthetische Polymerisate verwendet werden.

8. Verwendung von Teilchenzusammensetzungen gemäß Ansprüchen 1 bis 2 in Baustoffgemischen.

9. Verwendung nach Anspruch 8, **dadurch gekennzeichnet, dass** die Baustoffgemische Mörtel, Putze, Spachtelmassen oder Dünnbettkleber sind.

## Claims

1. Particle compositions of cellulose ether and at least one of a polyacrylamide or a polyacrylamide derivative as well as optionally further auxiliaries, **characterized in that**
I. the particles comprise a plurality of solid phases, whereby
II. the solid phase of the polyacrylamide or polyacrylamide derivative is contained in the solid phase of the cellulose ether.

2. Particle composition according to claim 1, **characterized in that** the polyacrylamide or polyacrylamide derivative is present in amounts of 0.01-25 % by weight based on the dry cellulose ether.

3. Process for the preparation of particle compositions of polysaccharides and/or polysaccharide derivatives and at least one synthetic polymerisate as well as optionally further auxiliaries, **characterized in that**
A) one or more synthetic polymerisates in a total amount of 0.01-25 % by weight, based on the dry polysaccharide or polysaccharide derivative, are added in non-solubilized form to a water-moist polysaccharide and/or polysaccharide derivative having a water content of 30-80 % by weight, and
B) this mixture is processed to a mass in a homogenizer water being optionally added in this process step, and
C) the obtained mass is ground and dried or first dried and then ground or subjected to mill-drying.

4. Process according to claim 3, **characterized in that** further additives are added in amounts of < 50 % by weight before, during or after the processing in the homogenizer.

5. Process according to any of claims 3 or 4, **characterized in that** cellulose ethers, preferably those having a thermal flocculation point in water, are used as polysaccharide derivatives.

6. Process according to any of claims 3 - 5, **characterized in that** the water content of the cellulose ether is 50-80 % by weight, preferably 65-75 % by weight

7. Process for the preparation of particle compositions according to any of claims 3-6, **characterized in that** polyacrylamide and polyacrylamide derivatives are used as synthetic polymerisates.

8. Use of the particle compositions according to claims 1-2 in construction material mixtures.

9. Use according to claim 8, **characterized in that** the construction material mixtures are mortar, plaster, fillers or thin-bed adhesives.

## Revendications

1. Composition de particules à base d'éther de cellulose et d'au moins un polyacrylamide ou dérivé de polyacrylamide, et en option, d'autres adjuvants, **caractérisée en ce que** :
i) les particules comportent plusieurs phases solides,
ii) et la phase solide de polyacrylamide ou de dérivé de polyacrylamide est contenue dans la phase solide d'éther de cellulose.

2. Composition de particules conforme à la revendication 1, **caractérisée en ce que** le polyacrylamide ou dérivé de polyacrylamide y est contenu en une quantité représentant de 0,01 à 25 % du poids de l'éther de cellulose sec.

3. Procédé de préparation de compositions de particules à base de polysaccharides et/ou de dérivés de polysaccharides et d'au moins un polymère synthétique, et en option, d'autres adjuvants, **caractérisé en ce que** :
A) l'on ajoute, à un polysaccharide et/ou dérivé de polysaccharide humecté d'eau, contenant de 30 à 80 % en poids d'eau, un ou plusieurs polymère(s) synthétique(s), sous forme non dissoute, en une quantité totale représentant de 0,01 à 25 % du poids du polysaccharide ou dérivé de polysaccharide sec ;
B) l'on traite ce mélange dans un appareil d'homogénéisation pour en faire une masse, tout en rajoutant de l'eau, en option, au cours de cette étape de procédé ;
C) et l'on broie finement et fait sécher la masse obtenue, ou bien on la fait d'abord sécher, puis on la broie finement ou on la soumet à un séchage avec broyage fin.

4. Procédé conforme à la revendication 3, **caractérisé en ce que** l'on rajoute les autres adjuvants, en des proportions de moins de 50 % en poids, avant, pendant ou après le traitement effectué dans l'appareil d'homogénéisation.

5. Procédé conforme à la revendication 3 ou 4, **caractérisé en ce que** l'on utilise, en tant que dérivés de polysaccharide, des éthers de cellulose, et de préférence, de ceux qui présentent un point de floculation thermique dans de l'eau.

6. Procédé conforme à l'une des revendications 3 à 5, **caractérisé en ce que** la teneur en eau de l'éther de cellulose vaut de 50 à 80 % en poids, et de préférence de 65 à 75 % en poids.

7. Procédé de préparation de compositions de particules, conforme à l'une des revendications 3 à 6, **caractérisé en ce que** l'on utilise, en tant que polymères synthétiques, des polyacrylamides et dérivés de polyacrylamide.

8. Utilisation d'une composition de particules, conforme à la revendication 1 ou 2, dans des mélanges de matériaux de construction.

9. Utilisation conforme à la revendication 8, **caractérisée en ce que** les mélanges de matériaux de construction sont des mortiers, des enduits, des masses à appliquer à la spatule ou des mortiers appliqués en couche mince.
